# EUROPÄISCHE PATENTSCHRIFT

(11) **EP 1 632 373 B1**
(45) Veröffentlichungstag und Bekanntmachung des Hinweises auf die Patenterteilung: **15.06.2011**
(21) Anmeldenummer: 05016540.6
(22) Anmeldetag: 29.07.2005
(51) Int. Cl.: B60H 1/32, B60H 1/00

(54) **Kraftfahrzeug-Standklimaanlage**
Air conditioning system for a vehicle with engine-independent cooling mode
Système de climatisation pour véhicule avec mode autonome

(30) Priorität: 01.09.2004 DE 102004042679; 15.04.2005 US 107012
(43) Veröffentlichungstag der Anmeldung: 08.03.2006
(73) Patentinhaber: Behr GmbH & Co. KG, 70469 Stuttgart (DE)
(72) Erfinder: Heberle, Arthur, Dr.-Ing., 68163 Mannheim (DE); Weinbrenner, Marcus, 70499 Stuttgart (DE)

(56) Entgegenhaltungen:
- DE-A1- 3 345 340
- DE-A1- 4 324 071
- DE-A1- 10 242 369
- DE-A1- 19 917 811
- DE-C1- 10 065 279
- US-A- 3 719 058

## Beschreibung

Die Erfindung betrifft eine Kraftfahrzeug-Standklimaanlage gemäß dem Oberbegriff des Anspruches 1.

Aus der DE 44 14 547 A1 ist eine Kraftfahrzeug-Standklimaanlage mit einem ersten, fahrzeugmotorisch angetriebenen Kompressor und einem zweiten, parallel hierzu geschalteten, elektrisch mit Hilfe von Kraftfahrzeug-Zusatzbatterien gespeisten Gleichstrom-Elektromotors antreibbaren Kompressor bekannt. Im Normalbetrieb, das heißt bei laufendem Motor, wird das Kältemittel im Kältemittel-Kreislauf ausschließlich mit Hilfe des ersten Kompressors, im Standbetrieb, das heißt bei stehendem Motor, ausschließlich mit Hilfe des zweiten Kompressors umgewälzt. Hierbei erfolgt jeweils die Kühlung des Kältemittels in einem Kondensator, welcher nach der Zusammenführung der beiden Zweige angeordnet ist.

Ferner sind eine Vielzahl von Standklimaanlagen mit einem Kältespeicher bekannt, jedoch benötigen diese eine gewisse Aufladezeit.

US 3 719 058 zeigt eine Standklimaanlage gemäß Oberbegriff des Anspruchs 1.

Derartige Kraftfahrzeug-Standklimaanlagen lassen somit noch Wünsche offen.

Es ist Aufgabe der Erfindung, eine Kraftfahrzeug-Standklimaanlage der eingangs genannten Art zu verbessem.

Diese Aufgabe wird gelöst durch eine Kraftfahrzeug-Standklimaanlage mit den Merkmalen des Anspruchs 1. Vorteilhafte Ausgestaltungen sind Gegenstand der Unteransprüche.

Erfindungsgemäß ist ein Kraftfahrzeug-Standklimaanlage mit einem Kältemittel-Kreislauf vorgesehen, in welchem mindestens ein Kompressor angeordnet ist, wobei es sich um einen mechanischen und/oder einen elektrischen Kompressor handeln kann, welcher das Kältemittel im Kältemittel-Kreislauf umwälzt. Dabei sind im Kältemittel-Kreislauf ein erster und ein zweiter luftgekühlter Kondensator zur Kühlung des vom Kompressor kommenden Kältemittels angeordnet ist, wobei zwei Lüfter vorgesehen sind. Ein Lüfter ist mechanisch mit Hilfe des Kraftfahrzeug-Motors und ein Lüfter ist elektrisch antreibbar. Alternativ kann ein Lüfter mit einem Hybridantrieb vorgesehen sein, der sowohl mechanisch als auch elektrisch antreibbar ist. Das Vorsehen eines mechanisch antreibbaren Lüfters ermöglicht eine einfache, insbesondere motordrehzahlabhängige Regelung des mechanisch angetriebenen Lüfters, wobei die vorhandene Energie optimal genutzt wird. Im Standbetrieb ist eine geringere Leistung ausreichend, so dass ein Elektromotor zum Antrieb des Lüfters ausreicht.

Die beiden unterschiedlich antreibbaren Lüfter sind an je einem Kondensator angeordnet. Erfindungsgemäß sind zwei Kondensatoren vorgesehen, wobei an jedem Kondensator mindestens ein Lüfter angeordnet ist, der sich in der Antriebsart von der des dem anderen Kondensator zugeordneten Lüfter unterscheidet. Die Kondensatoren können entsprechend dem Betriebszustand, in welchem der jeweilige Lüfter in Betrieb ist, ausgelegt werden, so dass eine Optimierung der Kühlleistung möglich ist.

Die Kondensatoren sind erfindungsgemäß in Reihe geschaltet oder im Standbetrieb in Reihe schaltbar. Hierbei ist bevorzugt der erste Kondensator von einem mechanisch antreibbaren Lüfter gekühlt und der zweite Kondensator von einem elektrisch antreibbaren Lüfter gekühlt. Dabei ist erfindungsgemäß ein Bypass um den ersten und/oder zweiten Kondensator vorgesehen . Wird ein Kondensator von Kältemittel durchströmt, so erfolgt eine gewisse Kühlung desselben, auch wenn der Lüfter steht, jedoch ist die vom Kompressor erforderliche Antriebsleistung auf Grund des größeren Strömungswiderstands bei einem Durchströmen des Kondensators größer, so dass das Vorsehen eines Bypasses zumindest dann sinnvoll ist, wenn der Energiegewinn durch den verringerten Strömungswiderstand größer als der Energiegewinn durch die Kühlleistung des Kondensators ohne Luftdurchströmung ist. Der Kondensator kann bei entsprechender Ausgestaltung im Falle eines zumindest teilweisen Durchströmens im Standbetrieb, in welchem in der Regel weniger Kältemittel benötigt wird, vorzugsweise auch als Sammler oder als zusätzlicher Sammler, d.h. wenn im Kältemittel-Kreislauf noch ein oder mehrere andere Sammler vorgesehen sind, dienen.

Bevorzugt weist die Kraftfahrzeug-Standklimaanlage, welche ein Front- und ein Fond-Klimagerät umfasst, mindestens zwei Kältemittel-Kreisläufe auf. Dadurch lassen sich Kühlleistungen der Klimageräte optimieren. Die Kältemittel-Kreisläufe können hierbei vorzugsweise miteinander verbunden sein, so dass insbesondere im Normalbetrieb nur ein Kältemittel-Kreislauf und im Standbetrieb zwei getrennte Kältemittel-Kreisläufe vorgesehen sind.

Im Folgenden wird die Erfindung anhand mehrerer Ausführungsbeispiele, teilweise mit Varianten, unter Bezugnahme auf die Zeichnung im Detail erläutert. In der Zeichnung zeigen:

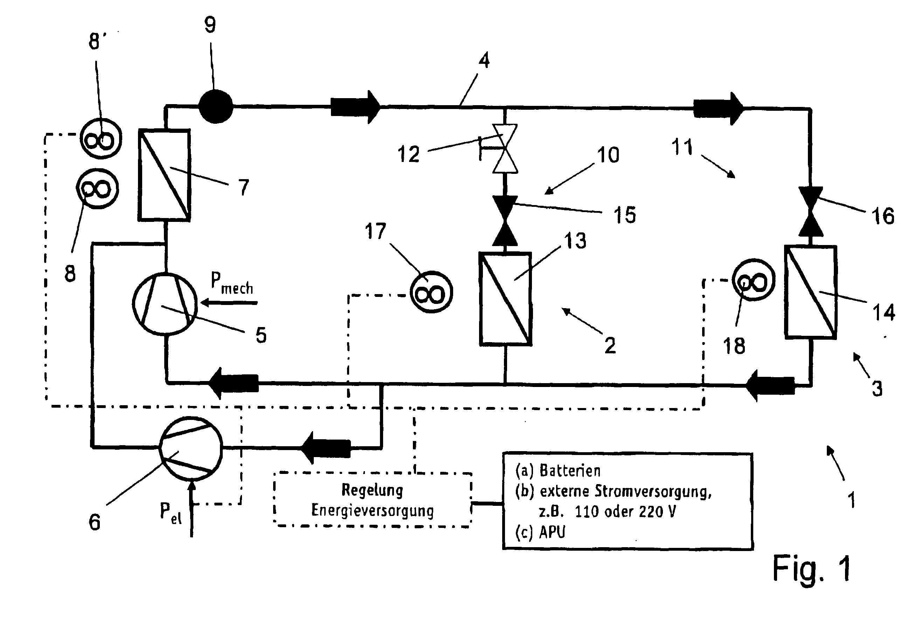

- Fig. 1: eine vereinfachte Darstellung eines nicht erfindungsgemäßen ersten Kühlkreislaufs.
- Fig. 2: eine vereinfachte Darstellung eines zweiten Kühlkreislaufs.
- Fig. 3: eine vereinfachte Darstellung eines Kühlkreislaufs gemäß dem ersten Ausführungsbeispiel, der Erfindung.
- Fig.4: eine vereinfachte Darstellung eines vierten Kühlkreislaufs.
- Fig.5: eine vereinfachte Darstellung eines fünften Kühlkreislaufs.
- Fig. 6: eine vereinfachte Darstellung eines Kühlkreislaufs gemäß dem zweiten Ausführungsbeispiel, der Erfindung.
- Fig.7: eine vereinfachte Darstellung eines siebten Kühlkreislaufs.
- Fig. 8: eine vereinfachte Darstellung eines achten Kühlkreislaufs.
- Fig. 9: eine vereinfachte Darstellung eines neunten Kühlkreislaufs.
- Fig. 10: eine vereinfachte Darstellung eines zehnten Kühlkreislaufs.
- Fig. 11: eine vereinfachte Darstellung eines Kühlkreislaufs gemäß dem dritten Ausführungsbeispiel, der Erfindung.
- Fig. 12: eine vereinfachte Darstellung eines zwölften Kühlkreislaufs gemäß.

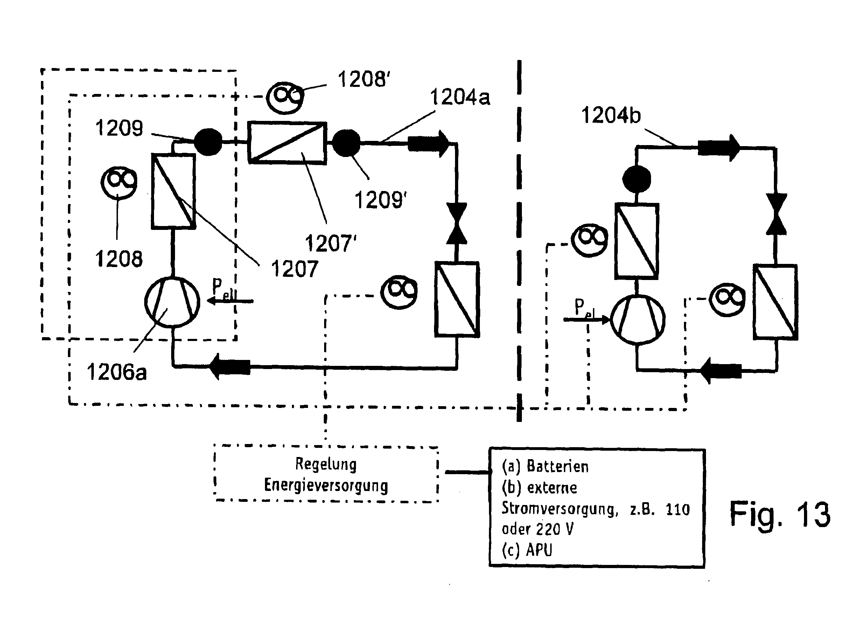

- Fig. 13: eine vereinfachte Darstellung eines dreizehnten Kühlkreislaufs.
- Fig. 14: eine vereinfachte Darstellung eines vierzehnten Kühlkreislaufs.
- Fig. 15: eine vereinfachte Darstellung eines Kühlkreislaufs gemäß dem vierten Ausführungsbeispiel, der Erfindung.
- Fig. 16: eine vereinfachte Darstellung eines Kühlkreislaufs gemäß dem fünften Ausführungsbeispiel, der Erfindung.
- Fig. 17: eine vereinfachte Darstellung eines Kühlkreislaufs gemäß dem sechsten Ausführungsbeispiel, der Erfindung.
- Fig. 18: eine vereinfachte Darstellung eines achtzehnten Kühlkreislaufs.
- Fig. 19: eine vereinfachte Darstellung eines neunzehnten Kühlkreislaufs.
- Fig. 20: eine vereinfachte Darstellung eines zwanzigsten Kühlkreislaufs.

Eine Kraftfahrzeug-Klimaanlage 1 mit einem Front-Klimagerät 2 und einem Heck- oder Fond-Klimagerät 3 weist einen Kältemittel-Kreislauf 4, welcher im Normalbetrieb von einem mit Hilfe des Kraftfahrzeug-Motors angetriebenen riemengetriebenen ersten Kompressor 5 und im Standbetrieb, das heißt bei stehendem Motor und somit stehendem ersten Kompressor 5, von einem elektrisch über Batterien oder eine externe (Wechsel-)Stromversorgung oder eine Hilfsenergieversorgung (APU = Auxiliary Power Unit) angetriebenen zweiten Kompressor 6 umgewälzt wird. Die Stromversorgung ist in allen Figuren durch Strich-Punkt-Linien angedeutet.

Es sind die beiden Kompressoren 5 und 6 in parallelen Zweigen des Kältemittel-Kreislaufs 4 angeordnet. Um ein Rückströmen bei stehendem zweiten Kompressor 6 zu verhindern, ist im entsprechenden Zweig des Kältemittel-Kreislaufs 4 in Kältemittel-Strömungsrichtung nach dem zweiten Kompressor 6 ein Rückschlagventil (nicht dargestellt) angeordnet. Ein entsprechendes Rückschlagventil kann auch im anderen Zweig nach dem ersten Kompressor 5 vorgesehen sein.

Im Folgenden wird der normale Betrieb, das heißt der Betrieb bei laufendem Motor, beschrieben. Das von dem ersten Kompressor 5 kommende, in Folge der Kompression heiße Kältemittel durchströmt zum Abkühlen einen Kondensator 7, welcher von Luft gekühlt wird. Dabei wird die Luft von einem ersten, mit Hilfe des Kraftfahrzeug-Motors angetriebenen Lüfter 8 durch den Kondensator 7 gefördert. Nach dem Kondensator 7 ist ein erster Sammler 9 zum Sammeln und Zwischenspeichern von überschüssigem flüssigem Kältemittel angeordnet. Im Kältemittel-Kreislauf 4 erfolgt anschließend eine Verteilung des Kältemittels auf zwei dem jeweiligen Klimagerät 2 bzw. 3 zugeordnete Zweige 10 und 11, wobei im, dem Front-Klimagerät 2 zugeordneten Zweig 10 ein Ventil 12 den Kältemitteldurchfluss absperren kann. Das Kältemittel strömt bevor es zum jeweiligen Verdampfer 13 bzw. 14 gelangt, durch ein Expansionsorgan 15 bzw. 16, im dem es expandiert und dadurch abgekühlt wird. Jedem der Verdampfer 13 und 14 ist ein elektrisch angetriebenes Gebläse 17 bzw. 18 zugeordnet, das die Luft durch den Verdampfer 13 bzw. 14 und zum Kraftfahzeug-Innenraum in der jeweiligen Klimazone fördert. Nach dem Durchströmen der Verdampfer 13 und 14 werden die Kältemittelströme wieder vereinigt und gelangen im normalen Betrieb wieder zum ersten Kompressor 5.

Im Standbetrieb, das heißt bei stehendem KraftfahrZeug-Motor, erfolgt die Umwälzung des Kältemittels ausschließlich durch den zweiten, elektrisch angetriebenen Kompressor 6. Das heiße Kältemittel strömt durch den Kondensator 7, wobei in Folge des stehenden Motors und des somit stehenden ersten Lüfters 8 keine Luft von demselben gefördert wird. Neben dem ersten Lüfter 8 ist jedoch ein zweiter Lüfter 8' vorgesehen, welcher elektrisch bei einem Standbetrieb betätigt wird, so dass eine ausreichende Kühlleistung durch den Kondensator 7 gewährleistet wird. Der weitere Verlauf entspricht dem des Normalbetriebs, wobei das Kältemittel auf Grund des stehenden ersten Kompressors 5 wieder zum zweiten Kompressor 6 gelangt.

Gemäß einer Variante in Hinblick auf die Regelung des zweiten Lüfters 8' wird dieser bei besonders großem Kühlbedarf parallel zum ersten Lüfter 8 betrieben. Die Regelung kann insbesondere kältemitteltemperaturabhängig und/oder umgebungstemperaturabhängig und/oder motordrehzahlabhängig erfolgen.

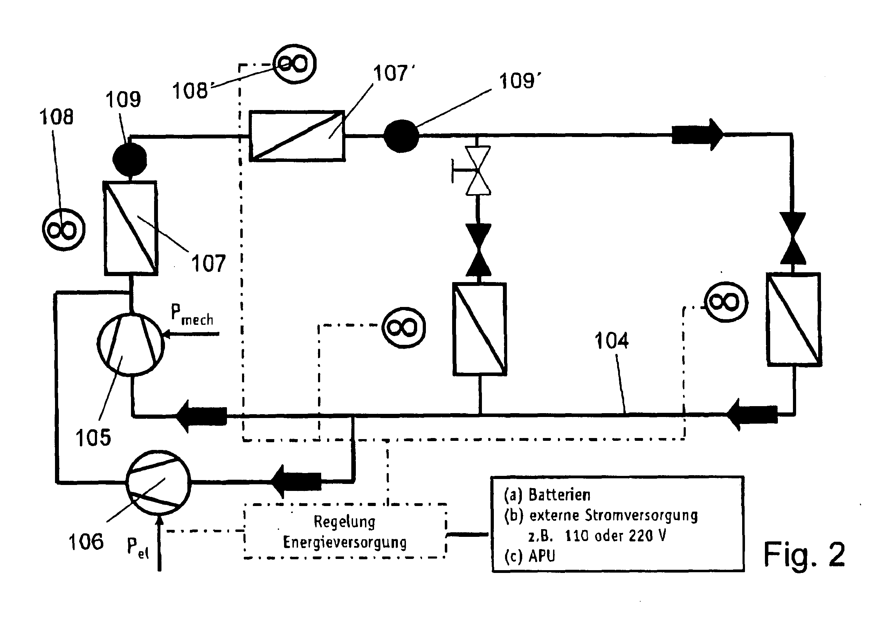

Bei dem zweiten in Fig. 2 dargestellten Kühlkreislauf ist der Kältemittel-Kreislauf 104 im Wesentlichen entsprechend dem des ersten Kühlkreislaufs aufgebaut, so dass gleiche und gleichwirkende Bauteile mit um 100 höheren Bezugszeichen als beim ersten Kühlkreislauf versehen sind. Die Parallelschaltung der beiden Kompressoren 105 und 106 entspricht der zuvor beschriebenen Anordnung. Nach dem Zusammenführen der beiden Zweige ist ein erster Kondensator 107 angeordnet, welcher im Normalbetrieb von Luft durchströmt wird, die von einem mechanisch angetriebenen Lüfter 108 gefördert wird. Darauf folgt ein erster Sammler 109. Im Gegensatz zum zuvor beschriebenen ersten Kühlkreislauf folgt dem ersten Sammler 109 ein zweiter Kondensator 107', welcher im Standbetrieb von Luft durchströmt wird, die von einem elektrisch angetriebenen Lüfter 108' gefördert wird. Anschließend folgt ein zweiter Sammler 109'. Der weitere Verlauf entspricht dem des Kältemittel-Kreislaufs 4 des ersten Kühlkreislaufs, so dass hierauf nicht näher eingegangen wird. Durch das Vorsehen zweier Kondensatoren 107, 107' mit je einem Lüfter 108, 108' lässt sich die Kühlleistung optimieren. Die Sammler 109, 109' ermöglichen ein optimiertes Sammeln von überschüssigem Kältemittel in dem Bereich, in dem es flüssig anfällt und von wo es bei Bedarf schnell wieder dem Kältemittel-Kreislauf zugeführt werden kann.

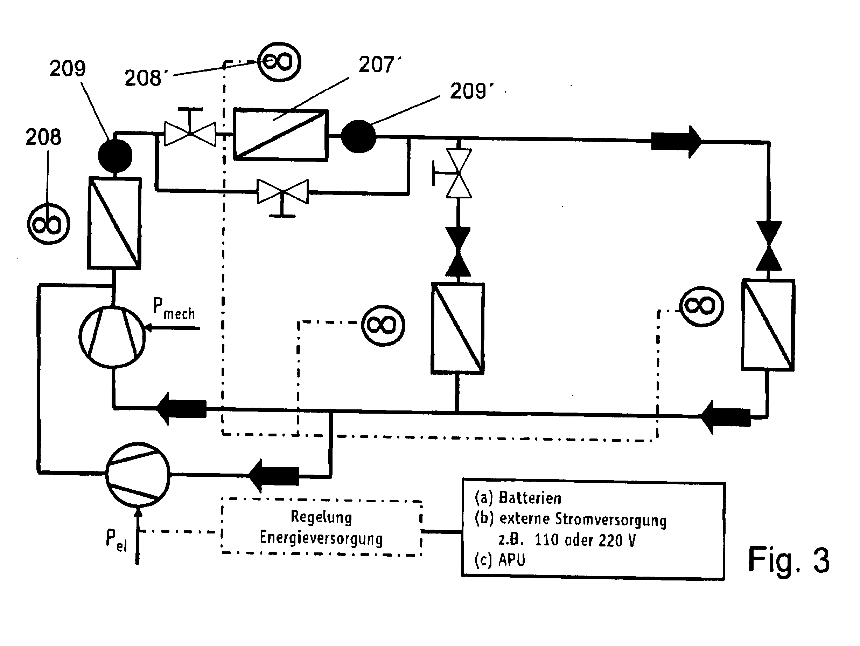

Das erste, in Fig. 3 dargestellte Ausführungsbeispiel der Erfindung entspricht im Wesentlichen dem zuvor beschriebenen zweiten Kühlkreislauf, so dass im Folgenden nur auf die Unterschiede eingegangen wird. Im Unterschied zum zweiten Kühlkreislauf ist nach dem ersten Sammler 209 eine Verzweigung mit einem Bypass um den zweiten Kondensator 207' und zweiten Sammler 209' vorgesehen, wobei die Regelung mittels je eines Ventils erfolgt, das in den beiden parallelen Zweigen angeordnet ist. Der Bypass mündet nach dem zweiten Sammler 209' ein. Im Normalbetrieb ist das Ventil vor dem zweiten Kondensator 207' geschlossen und das Ventil im Bypass offen, so dass das gesamte Kältemittel am zweiten Kondensator 207' vorbei geleitet wird. Bei Umschalten auf den Standbetrieb wird das Ventil vor dem zweiten Kondensator 207' geöffnet und das andere Ventil geschlossen, so dass das Kältemittel durch den zweiten Kondensator 207' und den zweiten Sammler 209' strömt. Ferner wird im Standbetrieb der zweite Lüfter 208' betätigt, während der erste, im Normalbetrieb vom Motor angetriebene Lüfter 208 auf Grund des stehenden Motors außer Betrieb ist, so dass der zweite Kondensator 207' in Verbindung mit dem zweiten Lüfter 208' die Kühlung des Kältemittels übernimmt.

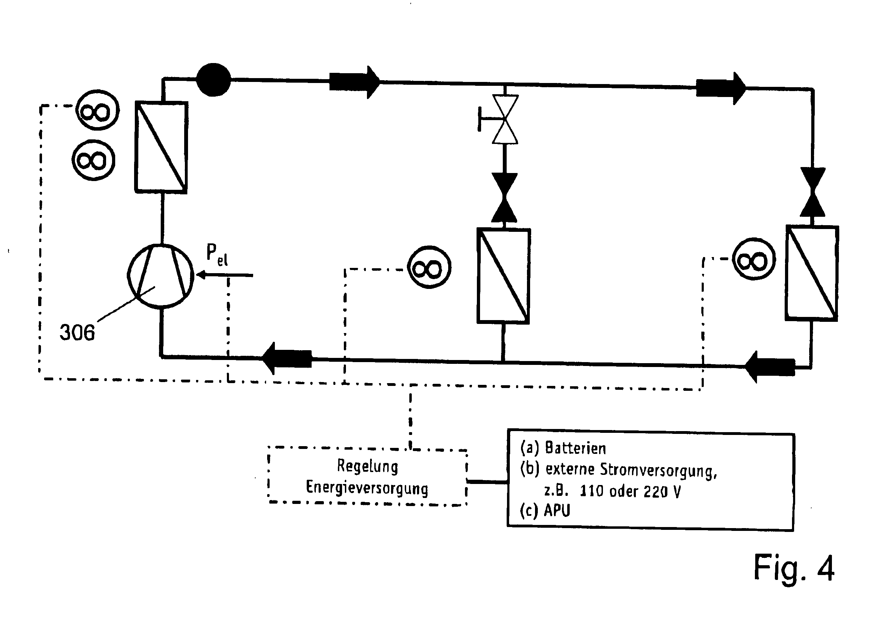

Gemäß dem vierten, in Fig. 4 dargestellten Kühlkreislauf sind im Gegensatz zum ersten Kühlkreislauf nicht zwei unterschiedlich angetriebene Kompressoren 5 und 6 vorgesehen, sondern es ist lediglich ein elektrisch angetriebener Kompressor 306 vorgesehen, der sowohl im Normalbetrieb als auch im Standbetrieb das Kältemittel bedarfsgerecht umwälzt. Ansonsten entspricht der vierte Kühlkreislauf dem ersten Kühlkreislauf, so dass im Folgenden nicht näher hierauf eingegangen wird.

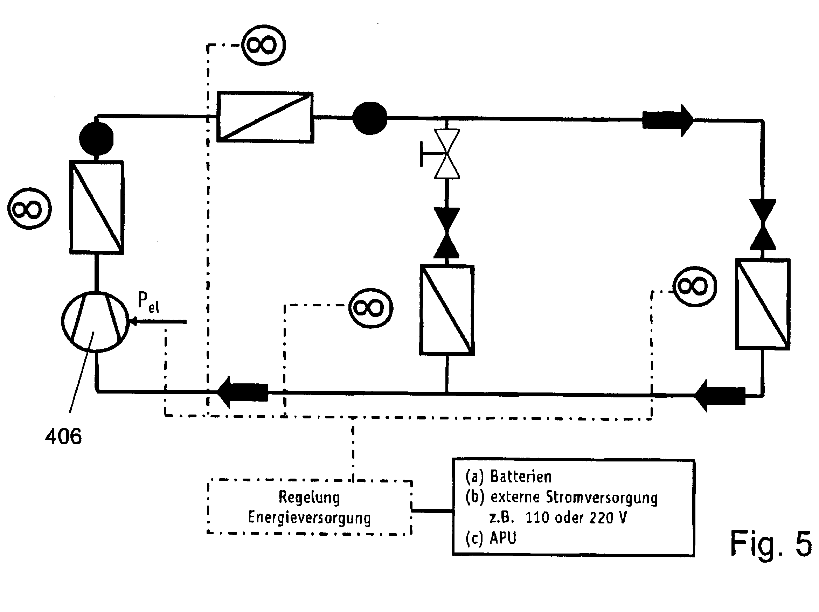

Fig. 5 zeigt den fünften Kühlkreislauf, welcher im Wesentlichen dem zweiten Kühlkreislauf von Fig. 2 entspricht, wobei im Unterschied hierzu jedoch nur ein elektrischer Kompressor 406 vorgesehen ist, welcher das Kältemittel sowohl im Normalbetrieb als auch im Standbetrieb umwälzt.

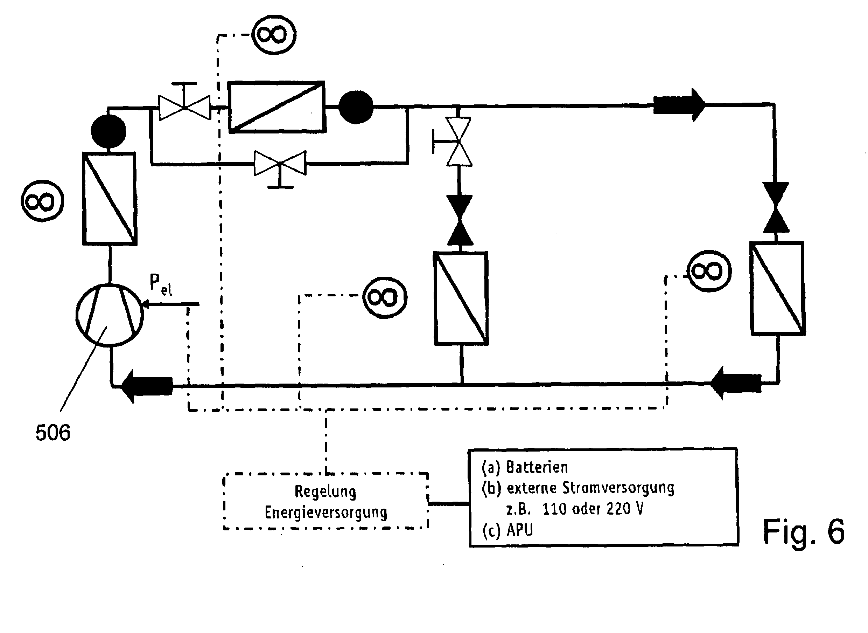

Das in Fig. 6 dargestellte zweite Ausführungsbeispiel der Erfindung entspricht im Wesentlichen dem in Fig. 3 dargestellten, ersten Ausführungsbeispiel, wobei wiederum, vergleichbar mit dem vorigen Kühlkreislauf, nur ein elektrischer Kompressor 506 vorgesehen ist, welcher das Kältemittel sowohl im Normalbetrieb als auch im Standbetrieb umwälzt.

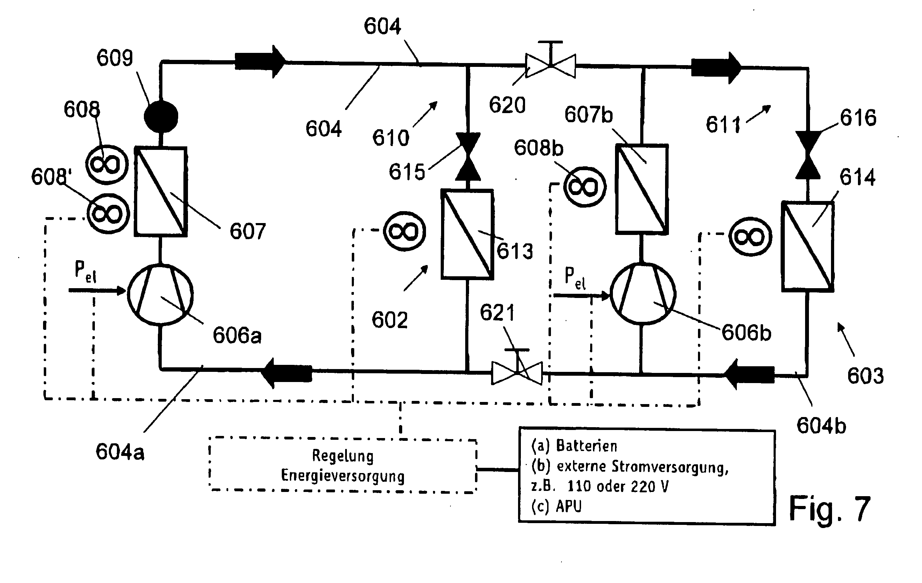

Gemäß dem siebten, in Fig. 7 dargestellten Kühlkreislauf ist der Kältemittel-Kreislauf 604 bei Bedarf mittels Ventilen 620, 621 in einen Kältemittel-Kreislauf 604a für das Front-Klimagerät 602 und einen Kältemittel-Kreislauf 604b für das Fond-Klimagerät 603 aufteilbar, in welchen jeweils ein elektrisch antreibbarer Kompressor 606a, 606b und ein Kondensator 607a, 607b angeordnet sind. Die Trennung durch die Ventile 620, 621 ermöglicht eine optimierte, bedarfsgerechte Kühlung, insbesondere im Standbetrieb.

Im Folgenden wird der Normalbetrieb bei geöffneten Ventilen 620, 621 beschrieben, wobei der im Fond-Kältemittel-Kreislauf 604b angeordnete Kompressor 606b steht. Der im Front-Kältemittel-Kreislauf 604a angeordnete Kompressor 606a wälzt das Kältemittel im Kältemittel-Kreislauf 604 um. Vom Kompressor 606a aus strömt das Kältemittel zum Kondensator 607, an welchem ein mechanisch angetriebener erster Lüfter 608a und ein, im Normalbetrieb stehender, elektrisch antreibbarer zweiter Lüfter 608a' angeordnet sind, und zum Sammler 609. Anschließend wird der Kältemittelstrom aufgeteilt, wobei ein Teil durch ein den Zweig 610 und der andere Teil durch den Zweig 611 strömt. Im Zweig 610 ist ein Expansionsorgan 615 vor einem Verdampfer 613 angeordnet. Im Zweig 611 ist entsprechend ein zweites Expansionsorgan 616 vor einem zweiten Verdampfer 614 angeordnet. Anschließend werden die beiden Zweige 610 und 611 wieder zusammengeführt, so dass das Kältemittel wieder zum Kompressor 606a gelangt.

Im Normalbetrieb kann neben der zuvor beschriebenen Schaltung mit offenen Ventilen 620, 621 auch ein Betrieb entsprechend dem im Folgenden beschrieben Standbetrieb mit geschlossenen Ventilen 620, 621 vorgesehen sein, wobei jedoch der mechanisch angetriebene Lüfter 608 weiterhin vom laufenden Motor angetrieben wird.

Im Standbetrieb sind die beiden Ventile 620 und 621 geschlossen, wodurch zwei unabhängige Kältemittel-Kreisläufe 604a und 604b gebildet sind, die jeweils von einem elektrisch angetriebenen Kompressor 606a und 606b umgewälzt werden. Der Kältemittel-Kreislauf 604a im Standbetrieb, welcher dem Front-Klimagerät 602 zugeordnet ist, entspricht - abgesehen vom dem Fond-Klimagerät 603 zugeordneten Teil - dem des Normalbetriebs, wobei an Stelle des mit Hilfe des Kraftfahrzeug-Motors angetriebenen Lüfters 608 der elektrisch angetriebene Lüfter 608' für eine Luftdurchströmung des Kondensators 607 sorgt. Nach dem Kondensator 607 durchströmt das gekühlte Kältemittel den Sammler 609, das Expansionsorgan 615, in dem es in Folge des Druckabfalls weiter abgekühlt wird, und den Verdampfer 613, bevor es wieder zum Kompressor 606a gelangt.

Der Kältemittel-Kreislauf 604b im Standbetrieb wird durch den elektrisch angetrieben Kompressor 606b umgewälzt, wobei das heiße Kältemittel in einem Kondensator 607b abgekühlt wird, wofür Luft, die von einem elektrischen Lüfter 608b gefördert wird, durch den Kondensator 607b geleitet wird. Gemäß dem vorliegenden Kühlkreislauf ist kein Sammler nach dem Kondensator 607b angeordnet, jedoch kann auch ein Sammler vorgesehen sein. Nach dem Kondensator 607b durchströmt das abgekühlte Kältemittel das Expansionsorgan 616 und den Verdampfer 614 bevor es wieder zum Kompressor 606b gelangt.

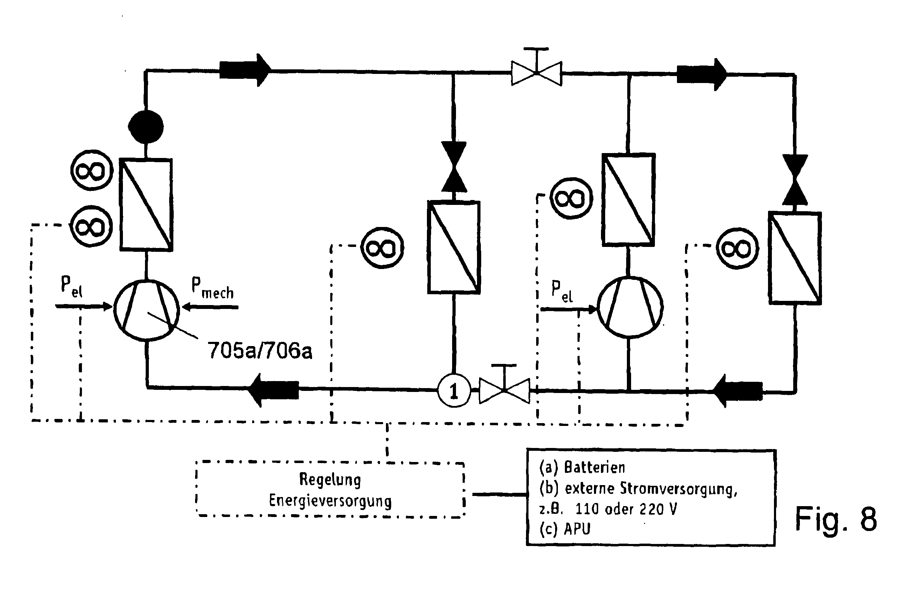

Das in Fig. 8 dargestellte achte Kühlkreislauf unterscheidet sich vom zuvor beschriebenen siebten Kühlkreislauf nur dadurch, dass an Stelle des elektrisch angetriebenen Kompressors 606a ein Hybrid-Kompressor 705a/706a vorgesehen ist, welcher zum Einen vom Motor und zum Anderen elektrisch angetrieben werden kann.

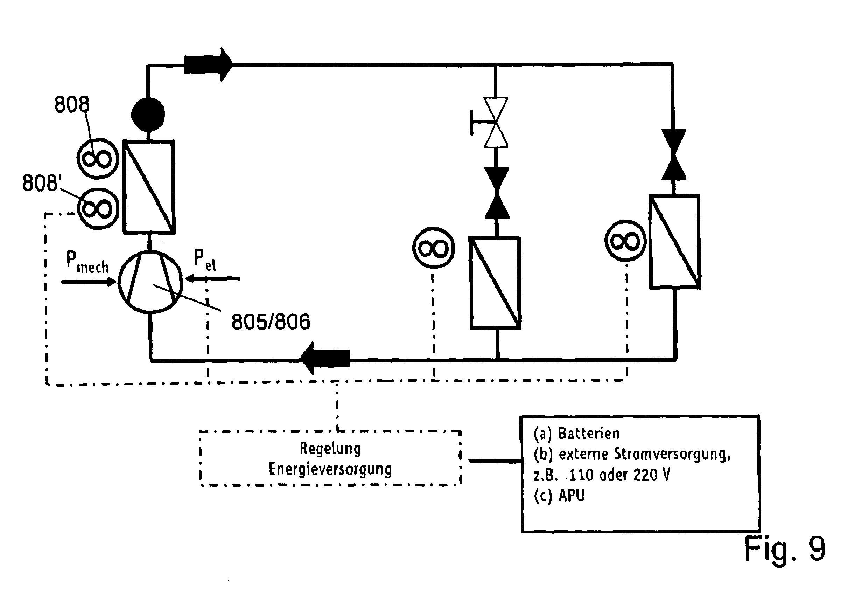

Fig. 9 zeigt den neunten Kühlkreislauf, welcher im Wesentlichen dem ersten Kühlkreislauf entspricht, jedoch an Stelle von zwei parallel zueinander angeordneten Kompressoren 5 und 6 einen Hybrid-Kompressor 805/806 aufweist, welcher im Normalbetrieb vom Kraftfahrzeug-Motor und im Standbetrieb mit Hilfe elektrischer Energie angetrieben wird. In Hinblick auf die Betätigung der Lüfter 808 und 808' sei auf den ersten Kühlkreislauf verweisen.

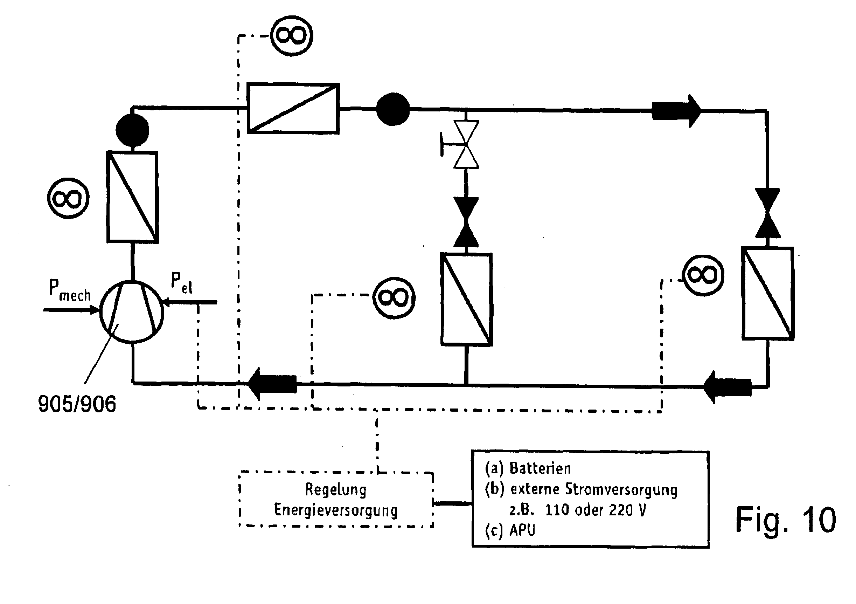

Der in Fig. 10 dargestellte zehnte Kühlkreislauf entspricht im Wesentlichen dem zweiten Kühlkreislauf, wobei an Stelle von zwei parallel zueinander angeordneten Kompressoren 105 und 106 entsprechend dem zuvor beschriebenen neunten Kühlkreislauf ein Hybrid-Kompressor 905/906 vorgesehen ist.

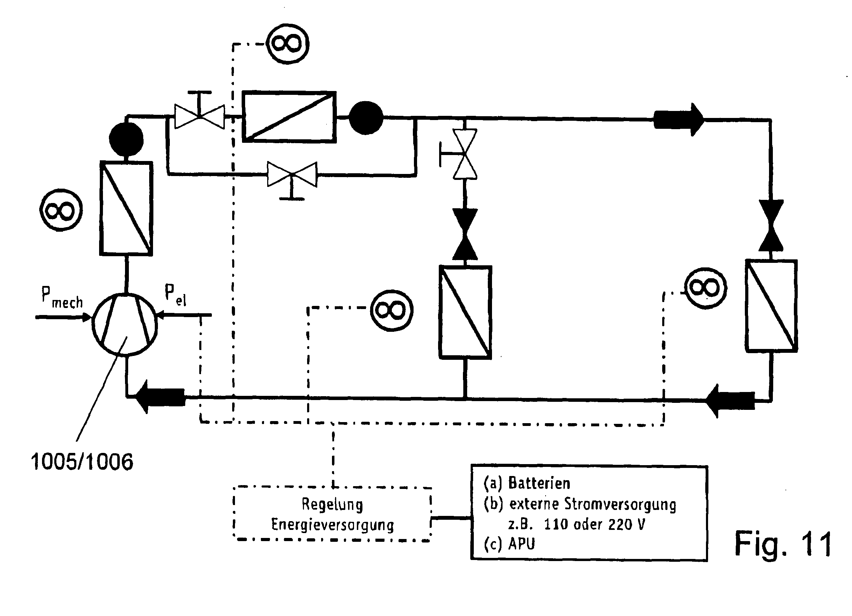

Das in Fig. 11 dargestellte dritte Ausführungsbeispiel der Erfindung entspricht im Wesentlichen dem ersten Ausführungsbeispiel, wobei an Stelle von zwei parallel zueinander angeordneten Kompressoren entsprechend dem zuvor beschriebenen neunten Kühlkreislauf ein Hybrid-Kompressor 1005/1006 vorgesehen ist.

Da bei parallel geschalteten Verdampfem und unterschiedlichen Kompressoren sich das Kältemittel im Standbetrieb bevorzugt in bestimmten Bauteilen, insbesondere in einem parallel geschalteten und sich nicht in Betrieb befindlichen Kompressor, im Überschuss ansammelt, was zu einem Abfall der Kälteleistung und unter Umständen auch zu einem Ausfall der Kompressoren führen kann, da im Standbetrieb genau so viel Kältemittel vorhanden ist, wie im Normalbetrieb, jedoch auf Grund der geringeren erforderlichen Kälteleistung eigentlich viel weniger Kältemittel benötigt wird, sind sinnvollerweise entsprechende Maßnahmen zur Verringerung der Kältemittelmenge im Standbetrieb zu treffen. Dies erfolgt gemäß dem vorliegenden dritten Ausführungsbeispiel dadurch, dass im Standbetrieb eine definierte Menge an Kältemittel aus dem Kältemittel-Kreislauf über einen Bypass (nicht dargestellt) abgesaugt und zwischengelagert wird. Sobald in den Normalbetrieb umgeschaltet wird, wird das Kältemittel wieder in den Kältemittel-Kreislauf gepumpt.

Gemäß einer alternativen Variante wird der elektrische Kompressor nicht kontinuierlich sondern nur intervallweise betrieben. Entsprechend einer weiteren Variante ist im Kältemittel-Kreislauf ein Kältemittel-Sammler mit variabler Füllmenge vorgesehen. Dabei ist auch eine Integration von Expansionsorgan in einem Sammler und Trocknereinheit möglich, so dass anstelle der beiden Expansionsorgane des ersten Ausführungsbeispiels entsprechende Kombinationen vorgesehen werden.

Weiter alternativ ist im Kältemittel-Kreislauf ein Bypass mit einem Eisspeicher vorgesehen, in den das überschüssige (kalte) Kältemittel eingeleitet wird, die Sole abkühlt, und während des Standbetrieb in diesem Bypass verweilt.

Als weitere Variante kann zumindest ein Teil des Kondensators, der im Standbetrieb nicht von kühlender Luft durchströmt wird, als Zwischenlager für das überschüssige Kältemittel dienen.

Gemäß einer nicht in der Zeichnung dargestellten Variante kann für den Standbetrieb ein Bypass, entsprechend zum in verschiedenen Ausführungsbeispielen vorgesehenen Bypass um den zweiten Kondensator, zum ersten Kondensator vorgesehen sein. Die Regelung erfolgt entsprechend mit Hilfe von zwei in den beiden Zweigen angeordneten Ventilen. Ein Bypass macht jedoch nur dann Sinn, wenn in einem Betriebszustand der dem mit Hilfe des Bypasses umgangenen Kondensator zugeordnete Lüfter nicht angetrieben wird.

Um die Luftströmung strömungstechnisch zu optimieren kann bei den zuvor beschriebenen Ausführungsbeispielen, bei denen zwei unterschiedlich antreibbare Lüfter an einem Kondensator angeordnet sind, ein Hybridantrieb für einen Lüfter vorgesehen sein, welcher die beiden Lüfter ersetzt.

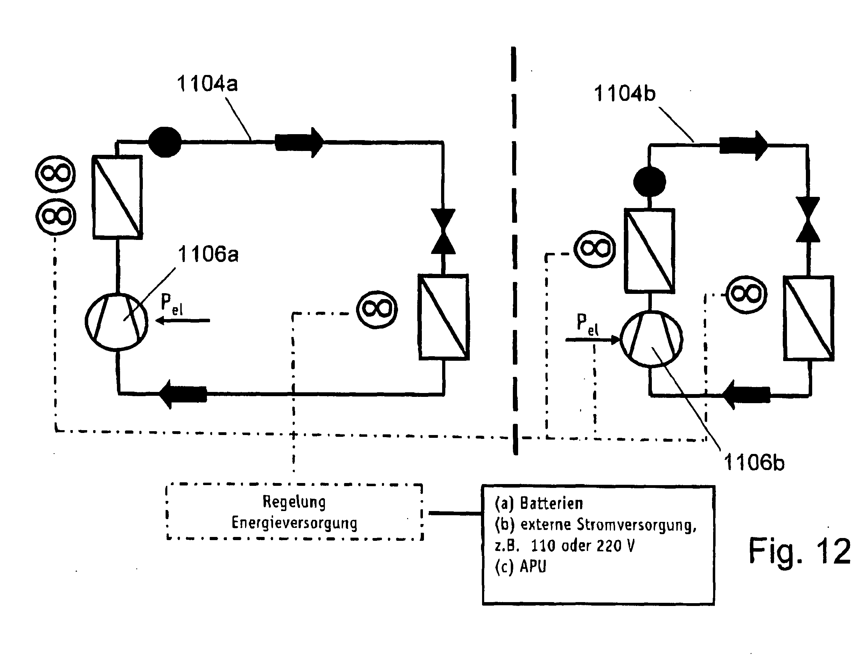

Fig. 12 zeigt einen zwölften Kühlkreislauf, gemäß dem zwei vollständig voneinander getrennte Kältemittel-Kreisläufe 1104a und 1104b vorgesehen sind, wobei dieses Kühlkreislauf dem siebten Ausführungsbeispiel bei geschlossenen Ventilen 620 und 621 entspricht. Gemäß dem zwölften Kühlkreislauf werden jedoch die beiden Kompressoren 1106a und 1106b sowohl im Normalbetrieb als auch im Standbetrieb elektrisch angetrieben.

In dem dreizehnten Kühlkreislauf, welches im Wesentlichen dem zwölften Kühlkreislauf entspricht, ist im ersten Kältemittel-Kreislauf 1204a nach dem elektrische angetriebenen Kompressor 1206a, dem ersten Kondensator 1207 und ersten Sammler 1209 ein zweiter Kondensator 1207' und zweiter Sammler 1209' angeordnet, wobei je Kondensator ein Lüfter vorgesehen ist, vorliegend beim ersten Kondensator 1207 ein mechanisch, vom Kraftfahrzeug-Motor angetriebener erster Lüfter 1208, welcher im Normalbetrieb angetrieben wird, und beim zweiten Kondensator 1207' ein zweiter, elektrisch antreibbarer Lüfter 1208', welcher im Standbetrieb angetrieben wird. Der zweite Kältemittel-Kreislauf 1204b entspricht dem Kältemittel-Kreislauf 1104b.

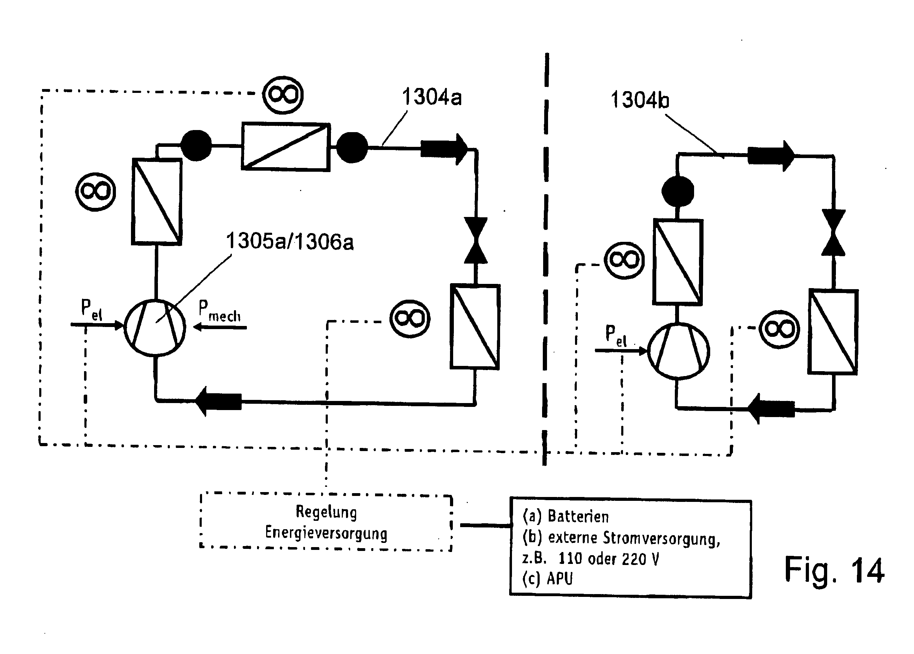

Beim vierzehnten, in Fig. 14 dargestellten Kühlkreislauf, welcher im Wesentlichen dem zuvor beschriebenen dreizehnten Kühlkreislauf entspricht, ist an Stelle des elektrisch angetrieben Kompressors 1206a ein Hybrid-Kompressor 1305a/1306a im ersten Kältemittel-Kreislauf 1304a vorgesehen. Der zweite Kältemittel-Kreislauf 1304b entspricht dem Kältemittel-Kreislauf 1104b des zwölften Kühlkreislaufs.

Bevorzugt ist eine erfindungsgemäße Kraftfahrzeug-Klimaanlage nach einem der beschriebenen Beispiele in einem Lastkraftwagen oder Truck mit einem von der Fahrerkabine bzw. dem Führerhaus abgetrennten Bereich, wie zum Beispiel einer Schlafkabine einsetzbar, wobei sich ein Front-Klimagerät in der Fahrerkabine befindet und ein Heck- oder Fond-Klimagerät im abgetrennten Bereich des Fahrzeugs.

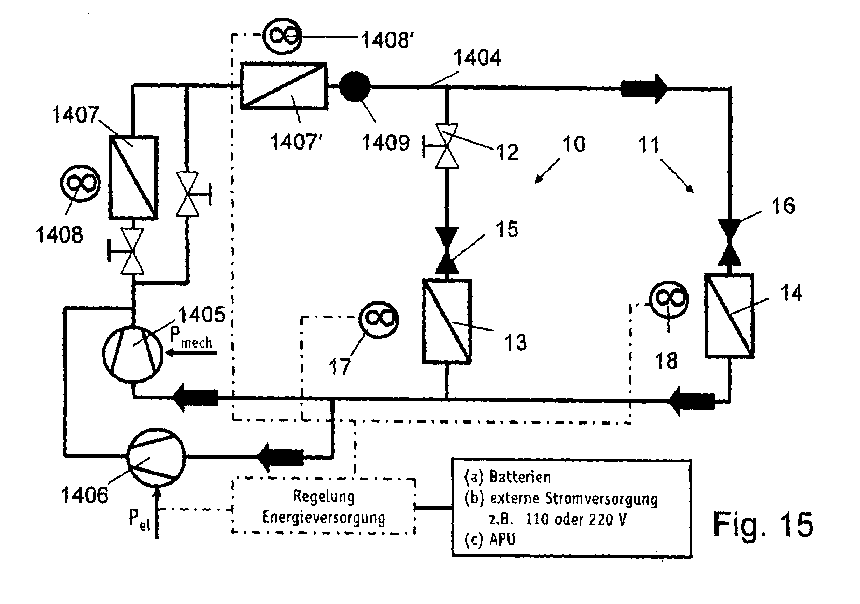

Gemäß dem vierten, in Fig. 15 dargestellten Ausführungsbeispiel, der Erfindung das, soweit im Folgenden nicht explizit beschrieben, dem ersten in Fig. 3 dargestellten Ausführungsbeispiel entspricht, ist nach der Zusammenführung der beiden parallelen Zweige mit den Kompressoren 1405 und 1406 eine Verzweigung vorgesehen, wobei ein erster, von einem ersten Ventil absperrbarer Zweig einen Bypass bildet zum zweiten, von einem zweiten Ventil absperrbaren Zweig, in welchem der erste Kondensator 1407, durch welchen Luft mit Hilfe des mechanisch angetriebenen Lüfters 1408 gefördert werden kann, angeordnet ist. Im Normalbetrieb ist das erste Ventil geschlossen und das zweite Ventil offen, so dass das Kältemittel durch den zweiten Zweig und somit durch den Kondensator 1407 strömt.

Um den zweiten Kondensator 1407' ist im Gegensatz zum ersten Ausführungsbeispiel kein Bypass vorgesehen. Ferner ist nur nach dem zweiten Kondensator 1407', durch welchen Luft mit Hilfe des elektrisch angetriebenen Lüfters 1408' gefördert werden kann, der Sammler 1409 angeordnet, d.h. der erste Sammler 209 gemäß dem ersten Ausführungsbeispiel entfällt gemäß dem vorliegenden Ausführungsbeispiel.

Im Folgenden wird der normale Betrieb, das heißt der Betrieb bei laufendem Motor, beschrieben. Das von dem ersten Kompressor 1405 kommende, in Folge der Kompression heiße Kältemittel durchströmt zum Abkühlen einen ersten Kondensator 1407, welcher von Luft gekühlt wird. Dabei wird die Luft von einem ersten, mit Hilfe des Kraftfahrzeug-Motors angetriebenen Lüfter 1408 bei offenem zweiten Ventil und geschlossenem ersten Ventil durch den Kondensator 1407 gefördert. Zusätzlich erfolgt die Kühlung auch durch den Fahrtwind. Anschließend strömt das gekühlte Kältemittel durch den zweiten Kondensator 1407', wobei der elektrisch angetriebene zweite Lüfter 1408' steht, und den Sammler 1409.

Im Kältemittel-Kreislauf 1404 anschließend erfolgt eine Verteilung des Kältemittels auf zwei dem jeweiligen Klimagerät 2 bzw. 3 zugeordnete Zweige 10 und 11, wobei im, dem Front-Klimagerät 2 zugeordneten Zweig 10 ein Ventil 12 den Kältemitteldurchfluss absperren kann. Das Kältemittel strömt, bevor es zum jeweiligen Verdampfer 13 bzw. 14 gelangt, durch ein Expansionsorgan 15 bzw. 16, im dem es expandiert und dadurch abgekühlt wird. Jedem der Verdampfer 13 und 14 ist ein elektrisch angetriebenes Gebläse 17 bzw. 18 zugeordnet, das die Luft durch den Verdampfer 13 bzw. 14 und zum Kraftfahrzeug-Innenraum in der jeweiligen Klimazone fördert. Nach dem Durchströmen der Verdampfer 13 und 14 werden die Kältemittelströme wieder vereinigt und gelangen im normalen Betrieb wieder zum ersten Kompressor 1405.

Im Standbetrieb, das heißt bei stehendem Kraftfahrzeug-Motor, erfolgt die Umwälzung des Kältemittels ausschließlich durch den zweiten, elektrisch angetriebenen Kompressor 1406. Das heiße Kältemittel strömt durch den Bypass zum ersten Kondensator 1407, d.h. durch den ersten Zweig bei geöffnetem ersten Ventil und geschlossenem zweiten Ventil. Der erste Lüfters 1408 steht in Folge des stehenden Motors. Anschließend strömt das noch heiße Kältemittel den zweiten Kondensator 1407', in welchem, da nunmehr der zweite Lüfter 1408' mit Hilfe der elektrischen Energieversorgung angetrieben wird, das Kältemittel abgekühlt wird. Flüssiges, überschüssiges Kältemittel kann sich im nachfolgenden Sammler 1409 sammeln. Entsprechend dem Normalbetrieb erfolgt anschließend eine Verteilung auf die beiden Zweige 10 und 11 und der weitere Verlauf entspricht dem zuvor beschriebenen, wobei das Kältemittel auf Grund des stehenden ersten Kompressors 1405 wieder zum zweiten Kompressor 1406 gelangt.

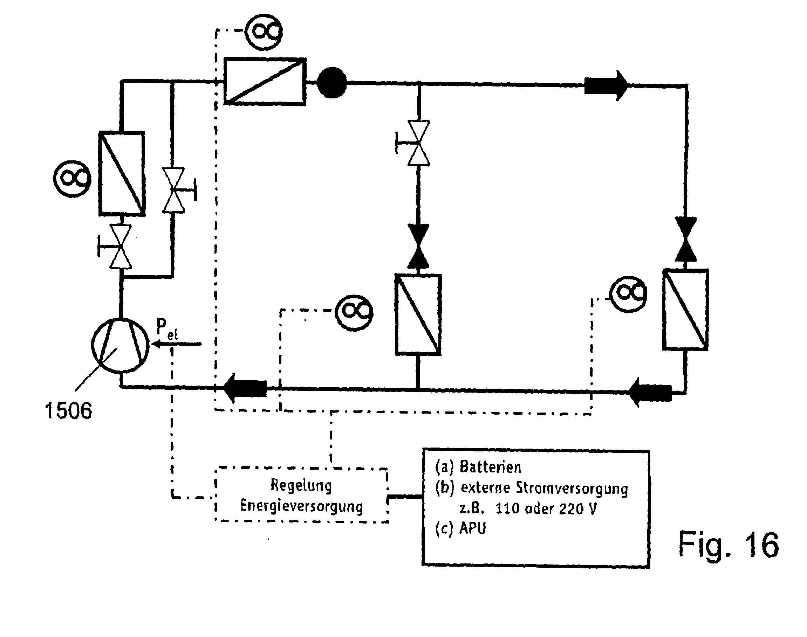

Gemäß dem in Fig. 16 dargestellten fünften Ausführungsbeispiel der Erfindung ist an Stelle der parallelen Zweige mit mechanisch angetriebenem Kompressor 1405 und elektrisch angetriebenem Kompressor 1406 lediglich ein elektrisch angetriebener Kompressor 1506 vorgesehen, welcher sowohl im Normalbetrieb als auch im Standbetrieb das Kältemittel bei Bedarf umwälzt. In Hinblick auf den Normal- und Standbetrieb wird auf die Beschreibung des vierten Ausführungsbeispiels verwiesen.

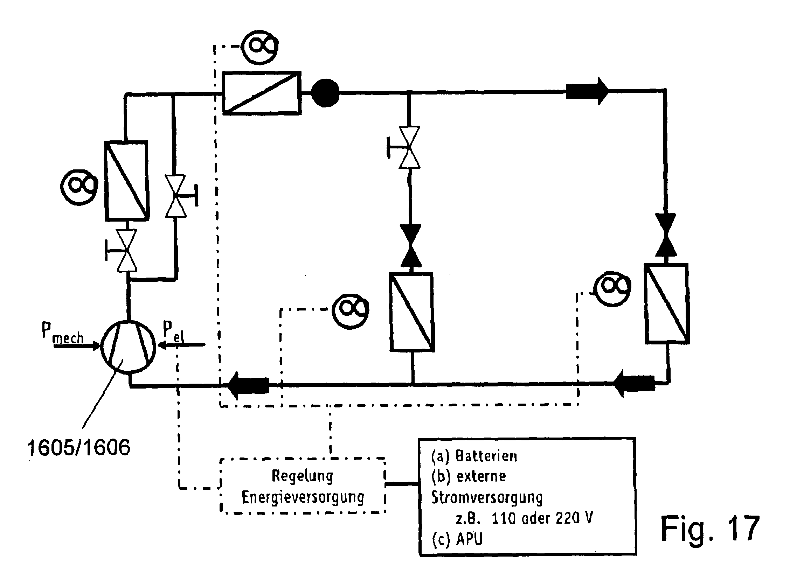

Bei dem in Fig. 17 dargestellten sechsten Ausführungsbeispiel ist an Stelle des elektrisch angetriebenen Kompressors 1406 gemäß dem fünften Kühlkreislaufs ein sowohl mechanisch vom Motor entsprechend dem Kompressor 1405 antreibbarer als auch elektrisch, entsprechend dem Kompressor 1406 antreibbarer Hybrid-Kompressor 1605/1606 vorgesehen, welcher im Normalbetrieb vom laufenden Kraftfahrzeug-Motor und im Standbetrieb mit Hilfe der Batterien, einer extemen Stromversorgung oder einer APU angetrieben wird. In Hinblick auf den sonstigen Normal- und Standbetrieb wird wiederum auf die Beschreibung des vierten Kühlkreislaufs verwiesen.

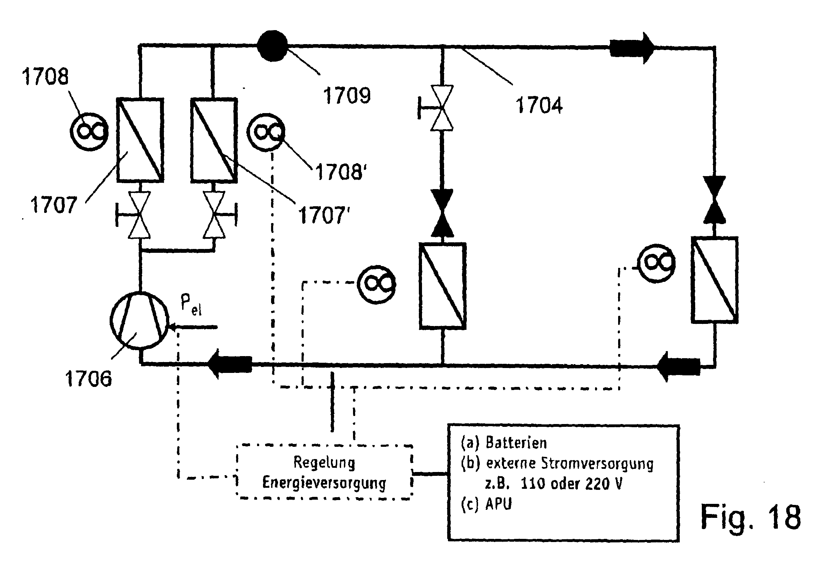

In dem in Fig. 18 dargestellten achtzehnten Kühlkreislauf ist ein elektrischer Kompressor 1706 zur Umwälzung des Kältemittels vorgesehen, der sowohl im Normalbetrieb als auch im Standbetrieb angetrieben wird. Im Kältemittel-Kreislauf 1704 sind dem elektrischen Kompressor 1706 nachgeordnet die beiden Kondensatoren 1707 und 1707' mit ihren Lüftern, d.h. dem mechanisch antreibbaren Lüfter 1708 und dem elektrisch antreibbaren Lüfter 1708', parallel zueinander geschaltet, wobei vor jedem ersten Kondensator 1707 ein erstes Ventil und vor dem zweiten Kondensator ein zweites Ventil angeordnet ist. Nach der Zusammenführung der parallelen Zweige und ist ein Sammler 1709 angeordnet. Die weitere Ausgestaltung des Kältemittel-Kreislaufs 1704 entspricht derjenigen der zuvor beschriebenen Kühlkreislaufe, so dass hierauf nicht näher eingegangen wird.

Im Normalbetrieb wird das Kältemittel vom elektrischen Kompressor 1706 umgewälzt und strömt auf Grund des offenen ersten Ventils und des geschlossenen zweiten Ventils durch den ersten Zweig, in welchem der erste Kondensator 1707 angeordnet ist. Dieser wird von Luft durchströmt, welche durch den mechanisch vom laufenden Motor angetriebenen Lüfter 1708 gefördert wird. Der elektrisch antreibbare Lüfter 1708' am zweiten Kondensator 1707' steht. Anschließend strömt das Kältemittel durch den Sammler 1709. In Hinblick auf den weiteren Strömungsverlauf wird auf die Beschreibung des ersten Kühlkreislaufs verwiesen.

Im Standbetrieb, d.h. bei stehendem Motor, ist das erste Ventil geschlossen und das zweite Ventil offen, so dass das heiße Kältemittel nur durch den zweiten Kondensator 1707' strömt. In diesem Fall wird derselbe von Luft durchströmt, die durch den elektrisch angetriebenen zweiten Lüfter 1708' gefördert wird, wohingegen der mechanisch antreibbare erste Lüfter 1708 steht. Anschließend strömt das Kältemittel durch den Sammler 1709. In Hinblick auf den weiteren Strömungsverlauf wird wiederum auf die Beschreibung des ersten Kühlkreislaufs verwiesen.

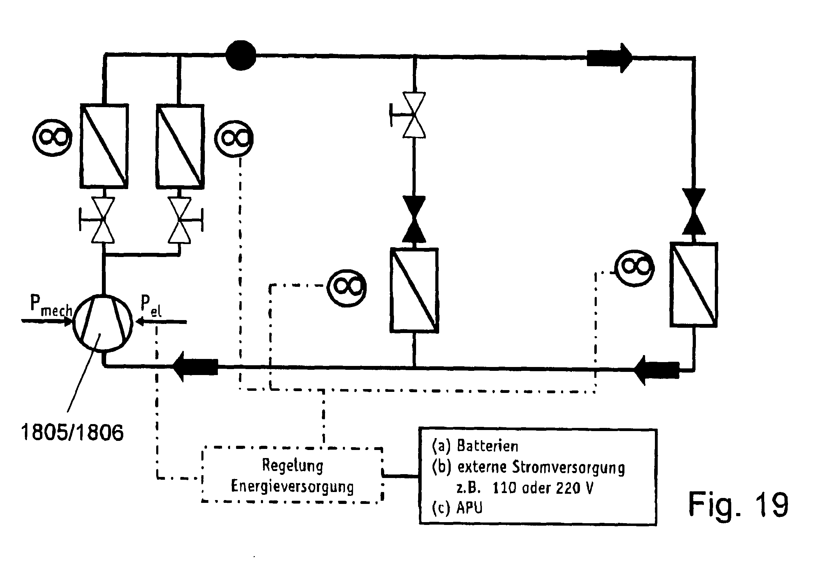

In dem neunzehnten, in Fig. 19 dargestellten Kühlkreislauf ist an Stelle des elektrischen Kompressors 1706 des achtzehnten Kühlkreislaufs ein Hybridkompressor 1805/1806 vorgesehen, der im Normalbetrieb vom laufenden Motor und im Standbetrieb elektrisch angetrieben wird. Ansonsten stimmt der neunzehnte Kühlkreislauf mit dem zuvor beschriebenen achtzehnten Kühlkreislauf überein.

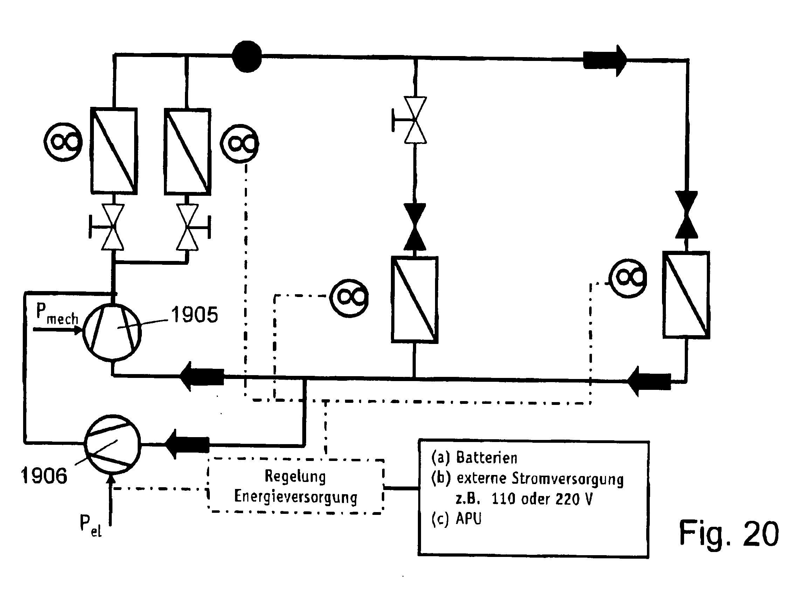

In dem zwanzigsten, in Fig. 20 dargestellten Kühlkreislauf ist, wie beim ersten Kühlkreislauf und ersten Ausführungsbeispiel, an Stelle des elektrischen Kompressors 1706 des achtzehnten Kühlkreislaufs eine Parallelschaltung eines mechanischen Kompressors 1905 und eines elektrischen Kompressors 1906 vorgesehen. Ansonsten stimmt der zwanzigste Kühlkreislauf mit dem achtzehnten Kühlkreislauf überein.

### Bezugszeichenliste

1 Kraftfahrzeug-Klimaanlage
2, 602 Front-Klimagerät
3, 603 Heck- oder Fond-Klimagerät
4, 104, 604, 604a, 604b, 1104a, 1104b, 1204a, 1204b, 1304a, 1304b , 1404,
1704 Kältemittel-Kreislauf
5, 105, 1405, 1905 erster oder mechanisch angetriebener Kompressor
6, 106, 306, 406, 506, 606a, 606b, 1106a, 1106b, 1206a, 1406, 1506, 1706,
1906 zweiter und/oder elektrisch angetriebener Kompressor
7, 107, 607, 607b, 1207, 1407 erster Kondensator
8, 108, 608, 808, 1208, 1408 erster Lüfter
9, 109, 609, 1209, 1409 erster Sammler
10, 610 erster Zweig
11, 611 zweiter Zweig
12 Ventil
13, 613 Verdampfer
14, 614 Verdampfer
15, 615 Expansionsorgan
16, 616 Expansionsorgan
17 Gebläse
18 Gebläse
107', 207', 1207', 1407' zweiter Kondensator
108', 208', 608', 808', 1208', 1408' zweiter Lüfter
109', 209', 1209', zweiter Sammler
620, 621 Ventil
705a/706a, 805/806, 905/906, 1005/1006, 1305a/1306, 1605/1606,
1805/1806 Hybrid-Kompressor

## Patentansprüche

1. Kraftfahrzeug-Standklimaanlage mit einem Kältemittel-Kreislauf (4), in welchem mindestens ein Kompressor (5, 6; 105, 106; 506; 1005/1006; 1405, 1406; 1506; 1605/1606) angeordnet ist, welcher das Kältemittel im Kältemittel-Kreislauf (4; 104; 1404) umwälzt, wobei im Kältemittel-Kreislauf (4; 104; 1404) ein erster luftgekühlter Kondensator (107, 107'; 207, 207'; 1407, 1407') zur Kühlung des vom Kompressor (5, 6; 105, 106; 506; 1005/1006; 1405, 1406; 1506; 1605/1606) kommenden Kältemittels und ein zweiter luftgekühlter Kondensator (107, 107'; 207', 207; 1407, 1407') angeordnet sind, wobei die Kondensatoren in Reihe geschaltet oder in einem Standbetrieb in Reihe schaltbar sind und zwei Lüfter (208, 208'; 808, 808'; 1408, 1408') vorgesehen sind, wobei ein Lüfter (208; 808; 1408) mechanisch mit Hilfe des Kraftfahrzeug-Motors und ein Lüfter (208'; 808'; 1408') elektrisch antreibbar ist und die beiden unterschiedlich antreibbaren Lüfter (208, 208'; 808, 808'; 1408, 1408') an je einem Kondensator (107, 107'; 207', 207; 1407, 1407') angeordnet sind **dadurch gekennzeichnet dass** ein Bypass um den ersten und/oder zweiten Kondensator (107, 107'; 207', 207; 1407, 1407') vorgesehen ist.

2. Kraftfahrzeug-Standklimaanlage nach Anspruch 1, **dadurch gekennzeichnet, dass** der erste Kondensator (107, 107'; 207, 207'; 1407, 1407') in Verbindung mit einem mechanisch antreibbaren Lüfter ( 208; 1208; 1408) und der zweite Kondensator (107, 107'; 207, 207'; 1407, 1407") in Verbindung mit einem elektrisch antreibbaren Lüfter (208'; 1208'; 1408') steht.

3. Kraftfahrzeug-Standklimaanlage nach einem der vorhergehenden Ansprüche, **dadurch gekennzeichnet, dass** im Standbetrieb beide Kondensatoren (107, 107'; 207, 207'; 1407, 1407') von Kältemittel zumindest teilweise durchströmt werden, wobei nur einer der Kondensatoren (107, 107'; 207, 207'; 1407, 1407') von einem Luftstrom gekühlt wird.

4. Kraftfahrzeug-Standklimaanlage nach Anspruch 3, **dadurch gekennzeichnet, dass** der im Standbetrieb nur teilweise durchströmte Kondensator als zusätzlicher Sammler für Kältemittel dient.

5. Kraftfahrzeug-Standklimaanlage nach einem der vorhergehenden Ansprüche, **dadurch gekennzeichnet, dass** jedem der Kondensatoren (107, 107'; 207, 207'; 1407, 1407') nachfolgend ein Sammler (209, 209') angeordnet ist.

6. Kraftfahrzeug-Standklimaanlage nach einem der vorhergehenden Ansprüche, **dadurch gekennzeichnet, dass** die Kraftfahrzeug-Standklimaanlage mindestens zwei Kältemittel-Kreisläufe aufweist.

7. Kraftfahrzeug-Standklimaanlage nach einem der vorhergehenden Ansprüche, **dadurch gekennzeichnet, dass** die Kraftfahrzeug-Standklimaanlage einen Kältemittel-Kreislauf aufweist, welcher in zwei unabhängige Kältemittel-Kreisläufe unterteilbar ist, wobei in jedem der Kältemittel-Kreisläufe mindestens ein Kompressor angeordnet ist.

## Claims

1. An air conditioning system for a vehicle with engine-independent cooling mode, comprising a coolant circuit (4) in which at least one compressor (5, 6; 105, 106; 506; 1005/1006; 1405, 1406; 1506; 1605/1606) is disposed, which circulates the coolant in the coolant circuit (4; 104; 1404), wherein the coolant circuit (4; 104; 1404) also includes a first air-cooled condenser (107 107'; 207, 207'; 1407, 1407') for cooling the coolant coming from the compressor (5, 6; 105, 106; 506; 1005/1006; 1405, 1406; 1506; 1605/1606), and a second condensor (107, 107'; 207', 207; 1407, 1407'), wherein the condensors are connected in series, or can be connected in series for an engine-independent cooling mode, and two fans (208, 208'; 808, 808'; 1408, 1408') are provided, wherein one fan (208; 808; 1408) can be driven mechanically using a vehicle engine, and one fan (208'; 808' 1408') can be driven electrically, each of the two differently driven fans (208, 208'; 808, 808'; 1408, 1408') being located on a condenser (107, 107'; 207', 207; 1407', 1407')
**characterized in that** a bypass around the first and/or second condenser (107, 107'; 207', 207; 1407 1407') is provided.

2. The air conditioning system for a vehicle with engine-independent cooling mode according to claim 1, **characterized in that** the first condensor (107, 107'; 207, 207'; 1407, 1407') is connected to a mechanically driven fan (208; 1208; 1408), and the second condensor (107, 107'; 207, 207'; 1407, 1407'') is s connected to an electrically driven fan (208'; 1208'; 1408').

3. The air conditioning system for a vehicle with engine-independent cooling mode according to one of the preceding claims, **characterized in that**, during autonomous operation, coolant flows at least partially through both condensors (107, 107'; 207, 207'; 1407, 1407'), but only one of the condensors (107, 107'; 207, 207'; 1407, 1407') is cooled by an air flow.

4. The air conditioning system for a vehicle with engine-independent cooling mode according to claim 3, **characterised in that** the condensor through which coolant flows only partially during autonomous operation is used as an additional collector for coolant.

5. The air conditioning system for a vehicle with engine-independent cooling mode according to one of the preceding claims, **characterized in that** a collector (209, 209') is disposed downstream of each of the condensors (107, 107'; 207, 207'; 1407, 1407').

6. The air conditioning system for a vehicle with engine-independent cooling mode according to one of the preceding claims, **characterised in that** the air conditioning system for a vehicle with engine-independent cooling mode comprises at least two coolant circuits.

7. The air conditioning system for a vehicle with engine-independent cooling 4 mode according to one of the preceding claims, **characterized in that** the air conditioning system for a vehicle with engine-independent cooling mode comprises one coolant circuit which can be subdivided into two independent coolant circuits, and at least one compressor is disposed in each of the coolant circuits.

## Revendications

1. Système de climatisation autonome pour véhicules automobiles, comprenant un circuit (4) de fluide frigorigène dans lequel est disposé au moins un compresseur (5, 6 ; 105, 106 ; 506 ; 1005 / 1006 ; 1405, 1406 ; 1506 ; 1605 / 1606) qui fait circuler le fluide frigorigène dans le circuit (4 ; 104 ; 1404) de fluide frigorigène, où un premier condenseur (107, 107'; 207, 207'; 1407, 1407') à refroidissement à air servant au refroidissement du fluide frigorigène provenant du compresseur (5, 6 ; 105, 106 ; 506 ; 1005 / 1006 ; 1405, 1406 ; 1506 ; 1605 / 1606), et un deuxième condenseur (107, 107' ; 207', 207 ; 1407, 1407') à refroidissement à air, sont disposés dans le circuit (4 ; 104 ; 1404) de fluide frigorigène, où les condenseurs sont montés en série et, au cours d'un fonctionnement en mode autonome, peuvent être montés en série, et il est prévu deux ventilateurs (208, 208' ; 808, 808' ; 1408, 1408') où un ventilateur (208 ; 808 ; 1408) peut être actionné mécaniquement à l'aide du moteur du véhicule automobile et un ventilateur (208' ; 808' ; 1408') peut être actionné électriquement, et les deux ventilateurs (208, 208' ; 808, 808' ; 1408, 1408') pouvant être actionnés de façon différente sont disposés chacun sur un condenseur (107, 107' 207', 207 ; 1407, 1407'),
**caractérise en ce qu'**il est prévu une dérivation autour du premier et / ou du deuxième condenseur (107, 107' ; 207', 207 ; 1407, 1407').

2. Système de climatisation autonome pour véhicules automobiles selon la revendication 1, **caractérisé en ce que** le premier condenseur (107, 107' 207, 207' ; 1407, 1407') communique avec un ventilateur (208 ; 1208 ; 1408) pouvant être actionné mécaniquement, le deuxième condenseur (107, 107' ; 207, 207' ; 1407, 1407') communique avec un ventilateur (208' ; 1208' ; 1408') pouvant être actionné électriquement.

3. Système de climatisation autonome pour véhicules automobiles selon l'une ou l'autre des revendications précédentes, **caractérisé en ce que**, au cours du fonctionnement en mode autonome, les deux condenseurs (107, 107' ; 207, 207' ; 1407, 1407') sont traversés au moins partiellement par du fluide frigorigène, où seulement l'un des condenseurs (107, 107' ; 207, 207' ; 1407, 1407') est refroidi par un flux d'air.

4. Système de climatisation autonome pour véhicules automobiles selon la revendication 3, **caractérisé en ce que** le condenseur traversé seulement de façon partielle, au cours du fonctionnement en mode autonome, sert de collecteur supplémentaire pour du fluide frigorigène.

5. Système de climatisation autonome pour véhicules automobiles selon l'une quelconque des revendications précédentes, **caractérisé en ce qu'**un collecteur (209, 209') est disposé à la suite de chacun des condenseurs (107, 107' ; 207, 207' ; 1407, 1407').

6. Système de climatisation autonome pour véhicules automobiles selon l'une quelconque des revendications précédentes, **caractérisé en ce que** le système de climatisation autonome pour véhicules automobiles présente au moins deux circuits de fluide frigorigène.

7. Système de climatisation autonome pour véhicules automobiles selon l'une quelconque des revendications précédentes, **caractérisé en ce que** le système de climatisation autonome pour véhicules automobiles présente un circuit de fluide frigorigène qui peut être divisé en deux circuits de fluide frigorigène indépendants, où au moins un compresseur est disposé dans chacun des circuits de fluide frigorigène.
